**Europäisches Patentamt**

**European Patent Office**

**Office européen des brevets**

(19)

(11) Numéro de publication : **0 189 357**
**B1**

(12) **FASCICULE DE BREVET EUROPÉEN**

(45) Date de publication du fascicule du brevet :
28.09.88

(51) Int. Cl.⁴ : **F 24 C   7/06**, F 24 C   7/00,
**A 47 J 37/06**

(21) Numéro de dépôt : **86420009.2**

(22) Date de dépôt : **09.01.86**

(54) **Procédé pour cuire tous aliments et dispositif pour sa mise en oeuvre.**

(30) Priorité : **09.01.85 FR 8500471**

(43) Date de publication de la demande :
**30.07.86 Bulletin 86/31**

(45) Mention de la délivrance du brevet :
**28.09.88 Bulletin 88/39**

(84) Etats contractants désignés :
**AT BE CH DE GB IT LI NL SE**

(56) Documents cités :
**FR-A- 1 199 565**
**FR-A- 1 596 525**
**US-A- 3 304 406**
**US-A- 3 414 709**

(73) Titulaire : **Jovanovic, Dragomir**
**6 Impasse Jean Moulin**
**F-38000 Pont-de-Claix Isère (FR)**

(72) Inventeur : **Jovanovic, Dragomir**
**6 Impasse Jean Moulin**
**F-38000 Pont-de-Claix Isère (FR)**

(74) Mandataire : **Perrier, Jean-Pierre et al**
**Cabinet GERMAIN & MAUREAU 12 rue de la République**
**F-42000 St-Etienne (FR)**

**Description**

Actuellement pour cuire les aliments, il est couramment fait usage d'un four avec ou sans gril, d'une cocotte classique ou à vapeur, de poële et éventuellement d'un four à micro-ondes. En effet, et comme cela sera mis en évidence plus loin, chacun de ces moyens a des possibilités différentes de celles des autres moyens, mais néanmoins limitées, de sorte que son utilisation dépend de la structure de l'aliment, de son état, frais, sec ou congelé, et du mode de préparation retenu. Il en résulte que chaque foyer doit disposer actuellement de la presque totalité de ces moyens de cuisson, ce qui constitue un investissement important. En outre, chacun de ces moyens est connu pour sa forte consommation d'énergie et pour son faible rendement thermique compte tenu des pertes convectives ou des pertes provenant des inerties thermiques. Enfin, ces moyens exigent un nettoyage important après usage.

On connaît en outre, par le brevet français 1 596 525 et par le brevet U.S. 3 414 709 des procédés et dispositif de réchauffage de plats cuisinés mettant en œuvre deux sources infrarouges espacées en vis-à-vis délimitant un espace de réception pour un récipient fermé non étanche en matériau perméable aux rayons infrarouges. Par leur structure, ces moyens utilisent l'effet radiatif soit pour réchauffer directement les aliments soit pour réchauffer les aliments et le récipient. En aucun cas, ils ne peuvent assurer la cuisson des aliments et encore moins être polyvalents et cuire tous types d'aliments.

La présente invention a pour but de fournir un procédé de cuisson pouvant être utilisé pour tous les aliments, quels que soient leur structure, leur état et le mode de préparation retenu, consommant moins d'énergie que les procédés traditionnels, assurant une cuisson rapide et permettant également de cuisiner sans apport de matières grasses, avec ou sans effet de dorage.

Ce procédé consiste à assurer la cuisson des aliments contenus dans le récipient, en présence d'eau dosée, par la combinaison de l'action radiative superficielle du rayonnement infrarouge et d'une cuisson à la vapeur dans le récipient par une succession de cycles, d'une part, d'évaporation de l'eau puis des gouttelettes de condensation, par absorption par celles-ci du rayonnement infrarouge et, d'autre part, de condensation des gouttelettes sur les aliments.

Avec ce procédé, l'aliment disposé dans le récipient est progressivement cuit par la conjonction des deux processus de transfert thermique que sont, d'une part, le transfert radiatif par rayonnement infrarouge, conduisant à un effet superficiel et, d'autre part, la cuisson en volume par la vapeur, provenant d'abord de l'évaporation de l'eau du récipient ou de l'humidité de l'aliment puis de l'évaporation des gouttelettes de condensation, évaporation résultant de l'absorption des infrarouges par l'eau. La vapeur ainsi créée, est à une température élevée, hors équilibre thermo-dynamique. Une partie importante de cette vapeur est produite par évaporation thermique des gouttelettes de condensation sur l'aliment, ce qui assure, par transfert successif entre la surface et le cœur de l'aliment, une pénétration optimale de la chaleur dans cet aliment et conduit à des temps de cuisson réduit. Des mets très variés peuvent ainsi être préparés en jouant sur le dosage des deux modes de transfert thermique, dosage s'effectuant de façon particulièrement simple, puisqu'il consiste à intervenir sur la puissance calorifique des sources infrarouges et sur la quantité d'eau introduite dans ce récipient. En effet, si pour certains aliments, l'humidité initiale de l'aliment permet d'obtenir, grâce à des phénomènes autorégulateurs, une cuisson satisfaisante, pour d'autres aliments particulièrement secs ou pour des modes de cuisson différents, il est opportun de rajouter une quantité d'eau dans le récipient. Le dorage, si recherché, est réalisé automatiquement sur les deux faces de l'aliment par le rayonnement infrarouge.

L'invention vise aussi le dispositif pour la mise en œuvre de ce procédé. Ce dispositif est du type comprenant un récipient fermé en matériau perméable aux infrarouges et composé d'une gamelle et d'un couvercle posé sur cette dernière, deux sources de rayonnement infrarouge, espacées, se faisant vis-à-vis sur un châssis commun et délimitant entre elles un espace ouvert à l'atmosphère de réception du récipient, et des moyens de réglage de la durée et de la cadence d'alimentation des sources.

Dans ce dispositif, chaque source infrarouge est agencée pour émettre un rayonnement infrarouge de forte densité apte à transformer en vapeur l'eau contenue dans le récipient et dans l'aliment, tandis que la gamelle est munie sur son fond d'une gorge de stockage de l'eau, et que le récipient est associé à un support amovible de manipulation, comportant des poignées de préhension, se disposant hors de la zone de rayonnement, et des moyens de positionnement aptes à coopérer avec des moyens complémentaires du châssis pour assurer le réglage de la position de l'aliment sensiblement à égale distance des deux sources de rayonnement infrarouge.

Le support qui est chauffé uniquement par conduction peut toujours être saisi par les poignées, disposées hors de l'espace de cuisson, et peut être ainsi utilisé pour amener le récipient sur la table en attente de consommation. Si cette consommation n'est pas immédiate, l'énergie calorifique emmagasinée dans le récipient est suffisante pour maintenir l'aliment au chaud.

D'autres caractéristiques et avantages ressortiront de la description qui suit en référence au dessin schématique annexé, représentant à titre d'exemples non limitatifs, plusieurs formes d'exécution du dispositif pour la mise en œuvre de ce procédé de cuisson.

Figure 1 est une vue en perspective par l'arrière montrant une première forme d'exécution de ce dispositif,

Figure 2 est une vue de face avec coupe longitudinale des deux boîtiers contenant les sources

2

infrarouges,

Figure 3   est une vue de côté en coupe transversale de l'ensemble du dispositif,

Figure 4   est une vue en perspective montrant, à échelle agrandie, le support amovible pour le récipient,

Figure 5   est une vue en perspective, montrant une autre forme d'exécution du dispositif,

Figure 6   est une vue de face, avec coupe longitudinale des boîtiers montrant une forme d'exécution de ce dispositif avec deux zones de cuisson.

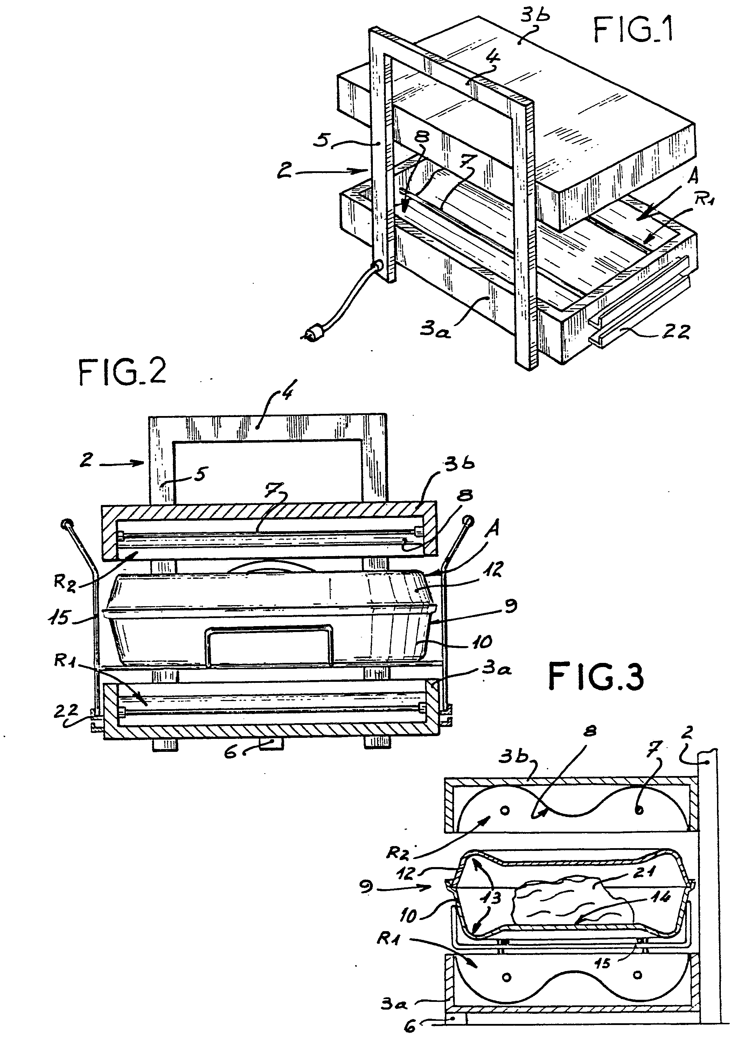

Dans la forme d'exécution représentée aux figures 1 à 4, le dispositif est composé d'un châssis 2 portant deux boîtiers respectivement inférieur 3a et supérieur 3b et délimitant entre eux, la zone de cuisson A. Le châssis 2 est constitué par un profilé tubulaire en forme de « U » retourné dont l'âme 4 est horizontale et disposée en partie supérieure. Ses ailes 5 sont verticales et constituent pieds de maintien par leurs extrémités inférieures dépassant du boîtier inférieur 3a. Ces deux pieds sont associés à un troisième pied 6 disposé sous le boîtier inférieur 3a dans l'intervalle entre les deux pieds du châssis 2 et sur la partie avant du boîtier précité.

Chacun des boîtiers 3a-3b est prismatique, est ouvert en direction de l'autre, et sert de logement à une source de rayonnement infrarouge R1-R2 de forte densité composée de deux tubes longitudinaux 7 parallèles entre eux et associés à un réflecteur 8 agencé pour concentrer le rayonnement dans la partie centrale de la zone de cuisson A. En d'autres termes, et comme montré aux figures 2 et 3, les sources de rayonnement des boîtiers 3a-3b se font vis-à-vis de manière à irradier avec le maximum de densité, le récipient 9 disposé entre elles. Chaque source fournit une énergie suffisante pour vaporiser l'eau contenue dans le récipient. Ce récipient 9 est composé de deux éléments de hauteurs différentes, à savoir une gamelle 10 et un couvercle 12. La gamelle et le couvercle sont réalisés dans un matériau perméable au rayonnement infrarouge, et absorbant faiblement la chaleur, tel qu'un verre trempé ou autre. La différence de hauteur entre les deux éléments 10-12 du récipient permet de les utiliser de manière réversible en fonction de la dimension de l'aliment dont il faut assurer la cuisson. Comme montré aux figures 2 et 3, les bords extérieurs du récipient sont sensiblement dans le prolongement des bords extérieurs des boîtiers 3a-3b de manière à éviter les déperditions calorifiques avec l'extérieur.

La figure 3 montre que le fond de chacun des deux éléments 10-12 du récipient est ceinturé par une gorge intérieure 13. Cette gorge sert au stockage de l'eau de démarrage ou des eaux de condensation et assure l'assainissement de la zone du fond 14 destinée à recevoir l'aliment.

Le récipient 9 est maintenu entre les deux boîtiers 3a-3b par un support amovible défini de façon générale par 15.

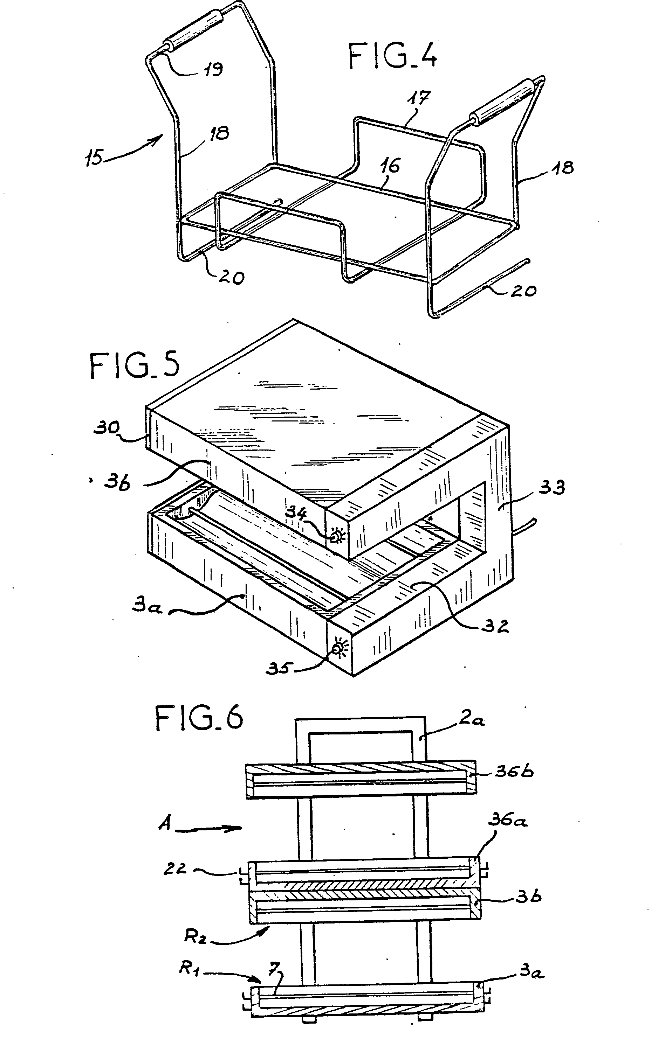

Comme montré plus en détail à la figure 4, le support 15 est composé d'un cadre horizontal 16 solidaire de retours coudés 17 débordant de ses bords longitudinaux. A ses extrémités, ce cadre 16 est solidaire de montants verticaux 18 dont la partie supérieure est coudée pour former poignée de préhension 19. Les montants disposés à chacune des extrémités du cadre 16 sont également solidaires d'une traverse inférieure coudée 20 formant piètement et organe de positionnement. En effet, chacune de ces traverses 20 est destinée à coopérer avec des moyens de positionnement vertical saillant latéralement des extrémités du boîtier 3a. Dans cette forme d'exécution, ces moyens sont constitués par des gouttières 22 mais ils peuvent présenter toute autre forme, pourvu qu'ils définissent plusieurs positions pour le support 15 de manière à permettre l'adaptation de la position de l'aliment 21 contenu dans le récipient, afin que cet aliment soit sensiblement à égale distance de chacune des sources R1-R2 de rayonnement infrarouge.

Les deux sources de rayonnement infrarouge respectivement inférieure R1 et supérieure R2, sont alimentées chacune à travers une minuterie spéciale, non représentée, permettant de régler leur temps et cadence d'alimentation. Chacune des sources est munie d'un interrupteur permettant de couper son alimentation pour permettre le dorage haut et bas de certains aliments en fin de cuisson et, en particulier, de la pâtisserie.

Pour cuire un aliment avec ce dispositif, il suffit donc de disposer cet aliment 21 sur la partie centrale 14 de l'élément inférieur du récipient 9, de déposer dans la gorge intérieure 13 une faible quantité d'eau, de l'ordre de deux cuillerées à soupe pour la majorité des aliments, de poser l'autre élément du récipient sur le premier et d'introduire l'ensemble du récipient 9 avec son support 15 entre les deux boîtiers 3a-3b. Durant cette introduction, l'opérateur fait attention au positionnement des traverses 20 sur les moyens 22 de manière que l'aliment disposé dans le récipient soit sensiblement à égale distance des sources de rayonnement R1-R2. Dès que ces deux sources sont alimentées, elles émettent un rayonnement infrarouge, traversant le récipient et portant très rapidement à ébullition l'eau contenue dans ce dernier. La vapeur d'eau ainsi formée se condense sur l'aliment et sur les parois froides du récipient en élevant la température de ces derniers. Les gouttelettes de condensation soumises au rayonnement sont à leur tour transformées en vapeur. Cette succession de cycles d'évaporation et de condensation s'effectue dans tout le récipient mais aussi et surtout au niveau de la couche superficielle de l'aliment où elle assure une pénétration optimale de l'énergie calorifique dans cet aliment. Grâce à la conjonction du rayonnement infrarouge et de la cuisson à la vapeur d'eau, l'aliment est très rapidement cuit. Il est à noter que durant cette cuisson, les pertes convectives provenant essentiellement du récipient sont réduites en raison de la faible dimension de celui-ci, au même titre d'ailleurs que les pertes résultant des inerties thermiques n'affectant que ce récipient. Durant toute la cuisson, la transparence du récipient permet de controler cette dernière sans avoir à interrompre les conditions de fonctionnement du dispositif.

En fin de cuisson, le récipient 9 avec l'aliment est extrait par le support 15 qui, malgré sa structure métallique, est à une température permettant de le saisir sans brûlure. Le récipient et le support peuvent être posés directement sur le lieu de consommation. La consommation peut être effectuée immédiatement ou dans un délai de l'ordre de vingt minutes, compte tenu de l'énergie calorifique emmagasinée dans le récipient assurant le maintien au chaud des aliments. La cuisson s'effectue sans projection de graisse ou de vapeur sur le dispositif et le seul élément qu'il est nécessaire de nettoyer, après usage, est le récipient 9. Il en résulte que ce dispositif simplifie également l'entretien des moyens culinaires.

La quantité d'eau qui est déposée dans le récipient dépend de la nature de l'aliment. C'est ainsi que pour des aliments secs, par exemple des spaghettis, cette quantité est de l'ordre de deux fois le poids de la quantité de spaghettis déposée dans le récipient, tandis que pour d'autres aliments présentant une humidité interne, la quantité d'eau peut être nulle, la cuisson s'effectuant alors au moyen de l'évaporation de cette humidité résiduelle dans le récipient.

Le tableau I annexé montre les résultats culinaires comparatifs obtenus en faisant cuire de nombreux aliments avec le dispositif selon l'invention, dans une cocotte à vapeur ou dans une cocotte simple, dans un four classique avec gril et dans un four à micro-ondes. Il met en évidence que, dans tous les cas, le dispositif selon l'invention permet d'obtenir des résultats bien supérieurs à ceux obtenus avec les moyens traditionnels et, surtout, permet de cuire tous les aliments, ce qui n'est pas le cas avec ces moyens traditionnels. Cette cuisson est effectuée dans tous les cas sans apport de matières grasses et est donc favorable à l'évolution des conditions de nutrition.

Le tableau II indique les consommations énergétiques des quatre moyens de cuisson apparaissant sur le tableau I pour la réalisation d'un menu commun composé, pour l'aliment I, d'un poulet de 1 200 grammes, ou d'un lapin de 1 200 grammes ou de douze cailles, et pour l'aliment 2 de douze tomates, poivrons ou courgettes farcies. Les observations du tableau montrent que la cocotte à vapeur et le four classique nécessitent un préchauffage et que ces deux moyens de cuisson, de même que le four à micro-ondes, nécessitent, pour servir un aliment à la même température que celui fourni par le dispositif selon l'invention, d'assurer un préchauffage du plat de réception de l'aliment et un maintien en température. Les temps de consommation énergétique pour la cocotte à vapeur et le four classique avec gril sont affectés d'un abattement de 20 % correspondant aux gains procurés par les moyens de régulation de leurs moyens de chauffage.

Ce tableau II met en évidence que le dispositif selon l'invention a une consommation énergétique bien inférieure aux moyens traditionnels.

A cet avantage très important, s'en ajoutent d'autres. Ainsi, en raison de son faible encombrement, le dispositif, selon l'invention peut être disposé directement sur table, ce qui permet aux convives de surveiller la cuisson durant le temps de dégustation des entrées froides, sans pour autant être perturbés par des émissions de vapeur ou d'odeur puisque celles-ci restent confinées à l'intérieur du récipient pendant toute la cuisson.

Le dispositif représenté à la figure 5 se différencie du précédent par le fait que le châssis commun supportant les deux boîtiers 3a-3b est constitué par deux éléments latéraux 30-32 liés aux extrémités des deux boîtiers précités. Chacun de ces éléments a la forme générale d'un « U » couché dont l'âme 33 est verticale et dont les ailes sont fixées auxdits boîtiers. L'un des éléments, et par exemple celui 30 est constitué par une tôle tandis que celui 32 a une structure tubulaire lui permettant, comme le châssis 2 de la forme d'exécution précédente, de loger les fils d'alimentation des sources de rayonnement infrarouges R1-R2 et de supporter à ses extrémités les minuteries spéciales 34-35 contrôlant l'alimentation de chacune de ces sources.

Dans la forme d'exécution représentée à la figure 6, le dispositif est double de manière à permettre la cuisson simultanée dans deux récipients distincts. A cet effet, le châssis 2a, de même type que celui 2 de la figure 1, est plus haut et supporte au-dessus des boîtiers 36a-36b deux autres boîtiers 35a-35b ouverts en direction l'un de l'autre, et comportant chacun deux sources de rayonnement infrarouges se faisant vis-à-vis et aptes à fonctionner simultanément sous le contrôle d'une minuterie indépendante de celle commandant les sources des boîtiers 3a-3b.

Il ressort de ce qui précède que le dispositif selon l'invention présente de nombreux avantages par rapport au moyen de cuisson traditionnel et en particulier, permet de cuire tous les aliments quelles que soient leurs préparations, consomme beaucoup moins d'énergie, ne nécessite qu'un entretien réduit du récipient, ne dégage pas d'odeur ou de vapeur désagréable pendant la cuisson, permet le contrôle permanent de cette cuisson, facilite le service et la présentation des aliments et peut être utilisé directement sur le lieu de consommation comme élément attractif.

De plus, il est peu encombrant, peu lourd, et moins onéreux qu'un four et que l'ensemble des moyens de cuisson qu'il faut acquérir pour assurer le même éventail de cuisson que lui.

(Voir Tableaux    pages suivantes)

## Tableau I
## Résultats culinaires comparatifs

| ALIMENTS | Dispositif selon l'invention | cocotte à vapeur ou cocotte simple | four classique avec gril | four à micro-ondes |
|---|---|---|---|---|
| **VIANDES** | | | | |
| poulet | bon | moyen cuisson longue | moyen (si convection) | médiocre |
| magret de canard | bon | moyen et fastidieuse | moyen | inadapté |
| lièvre | moyen | moyen long, fastidieux | inadapté | inadapté |
| chevreuil | moyen | moyen | inadapté | inadapté |
| rôti de porc | bon | moyen pas indiqué | bon | moyen. |
| cotes de porc | bon | moyen | bon avec grill | médiocre |
| patés | bon | médiocre | médiocre | inadapté |
| roast-beaf | bon | moyen | bon | médiocre |
| boeuf bourguignon | bon | bon | inadapté | médiocre |
| cote de boeuf | bon | inadapté | moyen avec gril | médiocre |
| cervelle | bon | inadapté | inadapté | médiocre |
| blanquette de veau | bon | bon | inadapté | médiocre |
| gigot | bon | inadapté | bon | inadapté |
| **POISSONS-CRUSTACES** | | | | |
| Morue dessalée | bon | médiocre | inadapté | médiocre |
| suamon poché | bon | moyen | inadapté | médiocre |
| cabillaud congelé | bon | moyen | médiocre (avec arrosage) | moyen |
| filet de sole | bon | médiocre | médiocre | médiocre |
| petite friture | moyen | moyen | inadapté | inadapté |
| truite bleu | bon | moyen | inadapté | bon |
| écrevisses | bon | bon | inadapté | médiocre |
| cuisses de grenouille | bon | moyen | inadapté | inadapté |
| escargots | bon | inadapté | bon | médiocre |
| langouste pochée | bon | moyen | inadapté | inadapté |
| coquilles St Jacques | bon | médiocre | bon | inadapté |

0 189 357

Tableau I (Suite)

| ALIMENTS | Dispositif selon l'invention | cocotte à vapeur ou cocotte simple | four classique avec gril | four à micro-ondes |
|---|---|---|---|---|
| LEGUMES (frais,congelés ou secs) | | | | |
| pomme de terre en robe | moyen | bon | inadapté | médiocre |
| gratin pomme de terre | bon | inadapté | bon | inadapté |
| macédoine de légumes | bon | bon | inadapté | inadapté |
| haricots verts | bon | bon | inadapté | moyen |
| épinards frais ou conge-lés | bon | moyen | inadapté | médiocre (congelés seulement) |
| flageolets | bon | bon | inadapté | inadapté |
| riz, tapioca, flocons d'avoine | bon | bon | inadapté | médiocre |
| pomme de terre, carotte choux fleurs à la vapeur | bon | bon | inadapté | moyen |
| FRUITS | | | | |
| pommes au sucre | bon | médiocre | bon | médiocre |
| pêches et abricots | bon | médiocre | inadapté | médiocre |
| PATES spaghettis, ragliatelle, gnochis, raviolis, maca-ronis, polentes | bon | moyen | inadapté | médiocre |
| ENTREMETS, PATISSE-RIE, DESSERTS pizza, quiche, tartes, clafoutis, gâteau de sa-voie, tarte tatain | bon | inadapté | bon | inadapté |
| PLATS COMPOSES | | | | |
| tomates farcies | bon | médiocre | moyen | médiocre |
| choucroute complète | bon | inadapté | moyen | inadapté |
| couscous avec semoule | bon | moyen | inadapté | inadapté |
| paella | bon | inadapté | moyen | inadapté |

0 189 357

**Tableau II**
**Consommations énergétiques comparatives**

| | Dispositif selon l'invention | Cocotte à vapeur | Four classique avec gril | Four à micro-ondes |
|---|---|---|---|---|
| consommation horaire nominale | 1400 W | 2000 W | 2500 W | 1400 W |
| Aliment 1 Observations | sans préchauffage, fini, prêt à servir, chaleur emmagasinée pour 20' d'attente | préchauffage 5', faire revenir 10', cuisson sous pression 20', conditionnement sur plat chaud, maintien 10' | préchauffage 5',cuisson avec convection forcée 60'(régulation thermostat déduite) conditionnement sur plat chaud, maintien au chaud 10' | cuit en 2 fois de 600 g envrion, 25' par lot,conditionnement sur plat chaud et court préchauffage avant service des 2 lots 5' |
| Temps de consommation énergétique | 25' | 45' - 20 % de régulation = 36' | 75' - 20 % de régulation = 60' | 55' |
| consommation énergétique | environ 584 W | 1200 W | 2500 W | 1284 W |
| Aliment 2 observations | | cuisson 23', conditionnement sur plat chaud, maintien en température 10' | préchauffage 10' cuisson 30' maintien 5' | cuisson 25' réchauffage 3' |
| Temps de consommation énergétique | 18' | 33' - 20 % régulation = 26,4' | 45' - 20 % régulation = 36' | 28' |
| consommation énergétique | environ 420 W | 880 W | 1500 W | 654 W |
| Total pour un repas | 1004 W | 2080 W | 4000 W | 1944 W |

**Revendications**

1. Procédé pour cuire tous aliments du type mettant en œuvre, un rayonnement infrarouge orienté émis par au moins deux sources espacées (R1-R2) délimitant dans l'atmosphère un espace (A) de réception pour au moins un récipient (9) fermé, non étanche, en matériau perméable aux rayons infrarouges, caractérisé en ce qu'il consiste, avant fermeture du récipient (9), à introduire dans le récipient (9) une quantité d'eau, dosée en fonction de la nature de l'aliment, puis, après fermeture du récipient, à le déposer sur un support (15) de cuisson et de service, et à amener l'ensemble, support-récipient, entre les deux sources de rayonnement infrarouge, pour, à travers le récipient (9), soumettre l'aliment et l'eau à une irradiation de grande densité et de puissance suffisante pour amener l'eau à ébullition et engendrer, par des cycles répétitifs d'évaporation-condensation, la cuisson en volume de l'aliment, simultanément à sa cuisson radiative superficielle.

2. Dispositif pour cuire tous aliments du type comprenant un récipient fermé 9 en matériau perméable aux infrarouges et composé d'une gamelle 10 et d'un couvercle 12 posé sur cette dernière, deux sources R1-R2, de rayonnement infrarouge, associées chacune à un réflecteur 8, espacées, se faisant vis-à-vis sur un châssis commun 2 et délimitant entre elles un espace A ouvert à l'atmosphère de réception du récipient 9, et des moyens de réglage de la durée et de la cadence d'alimentation des sources R1-R2 caractérisé en ce que, chaque source infrarouge R1-R2 est agencée pour émettre un rayonnement infrarouge de forte densité apte à transformer en vapeur l'eau contenue dans le récipient 9 et dans l'aliment, tandis que la gamelle 10 est munie sur son fond d'une gorge 13 de stockage de l'eau, et que le récipient 9 est associé à un support amovible 15 de manipulation, comportant des poignées de préhension 19, se disposant hors de la zone de rayonnement, et des moyens de positionnement 20 aptes à coopérer avec des moyens complémentaires du châssis pour assurer le réglage de la position de l'aliment sensiblement à égale distance des deux sources R1-R2.

3. Dispositif selon la revendication 2 caractérisé en ce que la gamelle 10 et le couvercle 12 du récipient 9 sont réversibles et ont des hauteurs différentes.

4. Dispositif selon l'une quelconque des revendications 2 et 3 caractérisé en ce que le fond de chacun des deux éléments 10-12 du récipient 9 est ceinturé par une gorge intérieure 13 de stockage de l'eau.

5. Dispositif selon la revendication 2 et l'une quelconque des revendications 3 et 4 caractérisé en ce que chacune des deux sources R1-R2 de rayonnement infrarouge est disposée avec son réflecteur 8 dans un boîtier prismatique 3a-3b qui, ouvert en direction de l'autre boîtier, est fixé sur le châssis commun 2-30-32-2a.

6. Dispositif selon la revendication 5 caractérisé en ce que le châssis commun 2 est constitué par un profilé tubulaire en forme de « U » retourné dont l'âme horizontale 4 est disposée en partie supérieure, et constitue poignée de portage, et dont les ailes verticales 5 liées aux boîtiers 3a-3b constituent, par leurs extrémités inférieures dépassant du boîtier inférieur 3a, deux des trois pieds de maintien.

7. Dispositif selon la revendication 5 caractérisé en ce que le châssis commun est constitué par deux éléments 30-32 qui, disposés aux extrémités des boîtiers inférieur 3a et supérieur 3b, ont chacun la forme d'un « U » couché dont l'âme 33 est verticale et dont les ailes horizontales sont liées, aux boîtiers correspondants.

8. Dispositif selon l'une des revendications 2 à 7, caractérisé en ce que le support amovible 15 est composé d'un cadre horizontal 16 muni, longitudinalement, de retours verticaux en débordement 17 et, à ses extrémités, de montants verticaux 18 qui, reliés entre eux en partie supérieure pour former poignée 19, sont chacun muni, au-dessous du cadre horizontal 16, d'une traverse inférieure coudée 20 apte à coopérer avec l'un ou l'autre des moyens 22 de positionnement vertical saillant latéralement du boîtier inférieur 3a.

**Claims**

1. A process for cooking food of the type using guided infra-red radiation emitted by at least two spaced apart sources (R1-R2) defining in the atmosphere a reception space (A) for at least one closed, unsealed container (9) of material permeable to infra-red rays, characterised in that it consists in introducing into the container (9), before it is closed, a quantity of water measured as a function of the nature of the food, then, after closing the container, placing it on a cooking and serving support (15), and bringing the support-container assembly between the two sources of infra-red radiation, in order to subject the food and water, through the container, to a high density irradiation of sufficient power to bring the water to boiling point and cause, by repeated cycles of evaporation-condensation, the cooking in bulk of the food simultaneously with its superficial radiative cooking.

2. A device for cooking food of the type including a closed container (9) of material permeable to infra-red rays and comprising a bowl (10) and a lid (12) placed on the latter, two spaced apart sources R1-R2 of infra-red radiation, each associated with a reflector (8), the sources being disposed opposite each other on a common frame (2) and defining between them a reception space (A) open to the atmosphere for the container (9), and means adjusting the duration and cycling of supply from the sources R1-R2,

characterised in that each infra-red source R1-R2 is arranged to emit high density infra-red radiation suitable to transform the water contained in the container and in the food into steam, whilst the bowl (10) is provided on its base with a channel (13) for storing water, and in that the container (9) is associated with a removable handling support (15), having gripping handles (19), arranged to be outside the radiation zone, and positioning means (20) adapted to co-operate with complementary means on the frame to ensure the adjustment of the position of the food at substantially equal distances from the two sources R1-R2.

3. A device according to Claim 2, characterised in that the bowl (10) and lid (12) of the container (9) are reversible and of different heights.

4. A device according to either of Claims 2 and 3, characterised in that an internal water storage channel extends around the base of each of the two elements (10-12) of the container (9).

5. A device according to Claim 2 and either of Claims 3 and 4, characterised in that each of the two sources R1-R2 of infra-red radiation is disposed with its reflector (8) in a prismatic housing (3a-3b) which is open in the direction of the other housing and fixed on to the common frame (2-30-32-2a).

6. A device according to Claim 5, characterised in that the common frame (2) is constituted by a turned-back « U »-shaped tubular section, of which the horizontal leg (4) is disposed as the upper portion and constitutes a carrying handle, and of which the vertical wings (5), connected to the housings (3a-3b), constitute, by their lower ends exceeding the lower housing (3a), two of the three supporting feet.

7. A device according to Claim 5, characterised in that the common frame is constituted by two elements (30-32), disposed at the ends of the lower housing (3a) and upper housing (3b), each element having the shape of a recumbent « U » of which the base is vertical and the horizontal wings are connected to the corresponding housings.

8. A device according to any one of Claims 2 to 7, characterised in that the removable support (15) comprises a horizontal frame (16) provided, longitudinally, with turned back vertical projections (17) and, at its ends, with vertical uprights (18) which are connected together in their upper portions to form handles (19) and each has, below the horizontal frame (16) a bent lower cross-piece (20) adapted to co-operate with one or other of the vertical positioning means (22) projecting laterally from the lower housing (3a).

**Patentansprüche**

1. Verfahren zum Kochen von Lebensmitteln, unter Verwendung einer gerichteten Infrarotstrahlung, die von wenigstens zwei im Abstand zueinander angeordneten Strahlungsquellen ($R_1$, $R_2$) abgegeben wird, welche in der Atmosphäre einen Raum (A) zur Aufnahme von wenigstens einem geschlossenen, nicht dichten Behälter (9) aus für Infrarotstrahlen durchlässigem Material begrenzen, dadurch gekennzeichnet, daß vor dem Verschließen des Behälters (9) in diesen Behälter (9) eine gewisse, in Abhängigkeit von der Art der Lebensmittel bemessene Wassermenge eingefüllt wird, daß sodann nach dem Verschließen des Behälters dieser auf einen Koch- und Servieruntersatz (15) gesetzt wird, und daß die Untersatz-Behälter-Anordnung zwischen die Infrarot-Strahlungsquellen verbracht wird, um die Lebensmittel und das Wasser durch den Behälter (9) hindurch einer Strahlung von großer Dichte und mit einer Leistung zu unterziehen, die ausreicht, das Wasser zum Sieden zu bringen und um durch wiederholtes Verdampfen und Kondensieren ein Durchgaren der Lebensmittel und gleichzeitig eine Oberflächengarung durch Strahlung zu erreichen.

2. Einrichtung zum Kochen von Lebensmitteln, umfassend einen geschlossenen Behälter (9) aus für Infrarotstrahlen undurchlässigem Material, welcher aus einem Topf (10) und einem auf diesen aufgesetzten Deckel (12) besteht, zwei mit Abstand zueinander angeordnete, jeweils mit einem Reflektor (8) ausgestattete Infrarot-Strahlungsquellen ($R_1$, $R_2$), die einander gegenüberliegend auf einem gemeinsamen Chassis (2) angeordnet sind und zwischen sich einen zur Umgebung offenen Raum (A) zur Aufnahme des Behälters (9) begrenzen, sowie Mittel zur Regelung der Dauer und der Folge der Stromzufuhr zu den Strahlungsquellen ($R_1$, $R_2$), dadurch gekennzeichnet, daß jede Infrarot-Strahlungsquelle ($R_1$, $R_2$) so betätigt wird, daß sie eine Infrarotstrahlung von hoher Dichte aussendet, die in der Lage ist, das im Behälter (9) und das im Lebensmittel enthaltene Wasser zu verdampfen, wobei der Topf (10) an seinem Boden mit einer Rinne (13) zur Wasserspeicherung versehen ist, und daß der Behälter (9) einem beweglichen Handhabungsuntersatz (15) zugeordnet ist, welcher mit außerhalb der Strahlungszone verbleibenden Griffen (19) und mit Positioniereinrichtungen (20) versehen ist, die mit komplementären Einrichtungen des Chassis zusammenwirken und eine Positionierung der Lebensmittel im wesentlichen mit gleichem Abstand zu beiden Strahlungsquellen sicherstellen.

3. Einrichtung nach Anspruch 2, dadurch gekennzeichnet, daß der Topf (10) und der Deckel (12) des Behälters (8) reversibel sind und unterschiedliche Höhen haben.

4. Einrichtung nach einem der Ansprüche 2 und 3, dadurch gekennzeichnet, daß der Boden jedes der beiden Teile (10, 12) des Behälters (9) von einer inneren Rinne (13) zur Wasserspeicherung umgeben ist.

5. Einrichtung nach Anspruch 2 und einem der Ansprüche 3 und 4, dadurch gekennzeichnet, daß jede der beiden Infrarot-Strahlungsquellen ($R_1$, $R_2$) mit ihrem Reflektor (8) in einem prismatischen Kasten (3a, 3b) angeordnet ist, welcher in Richlung zum jeweils anderen Kasten offen und am gemeinsamen Chassis (2, 30, 32, 2a) befestigt ist.

6. Einrichtung nach Anspruch 5, dadurch gekennzeichnet, daß das gemeinsame Chassis (2) aus einem Rohrprofil in der Form eines auf dem Kopf stehenden « U » besteht, dessen horizontaler Mittel-Schenkel (4) im oberen Bereich liegt und einen Tragegriff bildet, und dessen vertikale, mit den Kästen (3a, 3b) verbundene Seitenschenkel mit ihren unteren, über den unteren Kasten (3a) überstehenden Enden zwei von drei Standfüßen bilden.

7. Einrichtung nach Anspruch 5, dadurch gekennzeichnet, daß das gemeinsame Chassis aus zwei Elementen (30, 32) besteht, die jeweils an den Enden des unteren Kastens (3a) und des oberen Kastens (3b) angeordnet und jeweils die Form eines liegenden « U » haben, deren Mittelschenkel (33) vertikal steht und deren horizontale Seitenschenkel mit zugeordneten Kästen verbunden sind.

8. Einrichtung nach einem der Ansprüche 2 bis 7, dadurch gekennzeichnet, daß der bewegliche Üntersatz (15) aus einem horizontalen Rahmen (16) besteht, welcher in Längsrichtung ausgerichtete, vertikal aufgebogene und überstehende Elemente (17) hat und an seinen Enden vertikale Stützen (18) aufweist, die miteinander im oberen Bereich zur Bildung von Griffen (19) verbunden sind und jeweils unterhalb des horizontalen Rahmens (16) mit einer unteren, knieförmig abgebogenen Traverse (20) versehen sind, die mit einem von mehreren der Einrichtungen (22) für die vertikale Positionierung zusammenwirken, die seitlich aus dem unteren Kasten herausstehen.

FIG.1

FIG.2

FIG.3

FIG.4

FIG.5

FIG.6

2